# FASCICULE DE BREVET EUROPEEN

(11) **EP 3 718 372 B1**
(45) Date de publication et mention de la délivrance du brevet: **27.08.2025**
(21) Numéro de dépôt: 18827201.7
(22) Date de dépôt: 29.11.2018
(51) Int. Cl.: H04W 4/38, H04W 12/033, H04W 12/088, H04W 12/71, H04W 76/10, H04L 67/12, H04W 4/70, H04W 88/08

(54) **PROCÉDÉ DE FABRICATION D'UN DISPOSITIF COMPRENANT UNE MEMBRANE SURPLOMBANT UNE CAVITÉ**
VERFAHREN ZUR HERSTELLUNG EINER VORRICHTUNG MIT EINER SICH ÜBER EINEN HOHLRAUM ERSTRECKENDEN MEMBRAN
METHOD FOR MANUFACTURING A DEVICE COMPRISING A MEMBRANE EXTENDING OVER A CAVITY

(30) Priorité: 01.12.2017 FR 1761508
(43) Date de publication de la demande: 07.10.2020
(73) Titulaire: Orange, 92130 Issy-les-Moulineaux (FR)
(72) Inventeur: LAMPIN, Quentin, 92326 Châtillon Cedex (FR); BARTHEL, Dominique, 92326 Châtillon Cedex (FR)
(86) Numéro de dépôt international: PCT/FR2018/053039
(87) Numéro de publication internationale: WO 2019/106302

(56) Documents cités:
- EP-A1- 1 879 332
- EP-A1- 1 879 332
- OLIVIER HERSENT ET AL: "LoRa Device Developer Guide", ORANGE CONNECTED OBJECTS & PARTNERSHIPS, 30 April 2016 (2016-04-30), XP055286484, Retrieved from the Internet <URL:https://partner.orange.com/wp-content/uploads/2016/04/LoRa-Device-Developer-Guide-Orange.pdf> [retrieved on 20160706]
- OLIVIER HERSENT ET AL: "LoRa Device Developer Guide", ORANGE CONNECTED OBJECTS & PARTNERSHIPS, 30 April 2016 (2016-04-30), XP055286484, Retrieved from the Internet <URL:https://partner.orange.com/wp-content/uploads/2016/04/LoRa-Device-Developer-Guide-Orange.pdf> [retrieved on 20160706]

## Description

L'invention se situe dans le domaine des télécommunications.

L'invention concerne plus particulièrement un système de communication dans lequel un terminal communique avec un serveur d'application apte à fournir des services applicatifs à ce terminal par l'intermédiaire d'un réseau de télécommunications, et plus particulièrement d'un serveur de ce réseau. Aucune limitation n'est attachée à la nature du terminal ni à la nature des services applicatifs fournis. Le terminal peut être un terminal fixe ou mobile, tel qu'un compteur électrique, un capteur...Le serveur d'application peut être opéré par un fournisseur de services quelconque, comme par exemple un fournisseur d'électricité, d'eau...

L'invention a aussi une application privilégiée mais non limitative dans le contexte de l'Internet des Objets, et notamment des architectures ou réseaux étendus de type LoRaWAN^{™} (pour « Long Range Wide Area Network »). De façon connue, le protocole en cours de standardisation LoRaWAN^{™} permet une communication radio à bas débit (inférieur à 50 kbit/s) et à faible consommation d'énergie, d'objets communiquant selon la technologie LoRa^{™} (pour « Long range »), et connectés à Internet via un réseau de communication.

Dans une architecture de type LoRaWAN^{™}, chaque terminal est amené à communiquer avec un serveur applicatif via un réseau de télécommunications. Plus particulièrement, les données émises par chaque terminal, via une liaison radio, sont reçues par une pluralité de passerelles ou stations de base qui les relaient vers un serveur du réseau, via une connexion filaire ou cellulaire. Ce serveur du réseau filtre les messages reçus des terminaux (et vérifie notamment leur provenance et leur intégrité), et les retransmet aux serveurs applicatifs concernés.

Malgré une technologie radio optimisée pour une longue portée, de nombreux terminaux conçus pour fonctionner selon la technologie LoRa^{™} ne parviennent pas à communiquer avec les passerelles du réseau Lora^{™} désiré car les signaux émis par ces terminaux ne parviennent pas jusqu'aux passerelles. C'est notamment le cas lorsque ces terminaux sont par exemple positionnés dans des zones telles que des sous-sols, des caves, des bâtiments en tôle...

De façon connue, des passerelles additionnelles peuvent être ajoutées au réseau LoRa^{™} pour permettre à ces terminaux de communiquer avec ce réseau.

Cependant, ces passerelles sont coûteuses. De plus, elles requièrent un raccordement secteur et une connexion cellulaire ou filaire.

Aussi, elles ne sont pas toujours mises en place ou elles le sont tardivement.

Dans cette situation qui peut être temporaire ou pérenne, les terminaux ne peuvent communiquer avec les serveurs du réseau LoRa^{™}.

Un des buts de l'invention est de remédier à des insuffisances/inconvénients de l'état de la technique et/ou d'y apporter des améliorations.

A cette fin, l'invention se rapporte à un procédé et un dispositif de gestion comme définis par les revendications indépendantes.

D'autres aspects de la présente invention sont définis par les revendications dépendantes.

Lors d'une première phase, un terminal est situé hors de la zone de couverture de tout équipement passerelle.

Aussi, bien que configuré pour communiquer via un équipement passerelle du réseau, avec un serveur applicatif de ce réseau, il ne peut communiquer avec aucun équipement passerelle.

Le dispositif de transmission, appelé également dispositif répéteur, est positionné dans la zone de couverture radio du terminal pour permettre à ce terminal d'accéder au réseau et de communiquer avec un serveur applicatif associé au terminal, via le serveur réseau. Grâce à ce dispositif de transmission, un terminal configuré pour se connecter à un serveur applicatif du réseau mais ne pouvant accéder directement via une liaison radio à un équipement passerelle du réseau, peut communiquer avec le serveur réseau et en conséquence avec un serveur applicatif via le serveur réseau.

Le réseau est par exemple un réseau LoRa^{™}.

Le dispositif de transmission se comporte vis-à-vis du réseau comme un terminal. Ainsi, il communique avec un équipement passerelle via des signaux radios, par exemple des signaux radio longue portée. L'équipement passerelle relaie les informations venant du dispositif de transmission vers un serveur du réseau. Ce serveur est typiquement un serveur, appelé généralement « serveur réseau » apte à relayer ces informations vers un serveur de gestion associé au dispositif de transmission. Réciproquement, les informations provenant du serveur de gestion et destinées au dispositif de transmission sont transmises à ce dispositif via le ou les serveurs de réseau et via l'équipement passerelle.

Le serveur de gestion est un serveur applicatif associé au dispositif de transmission.

Plus particulièrement, le terminal émet une demande de connexion à un serveur applicatif du réseau. La demande de connexion est interceptée par le dispositif de transmission qui détient des données de gestion représentatives d'un droit de gestion du terminal. Le dispositif de transmission et le terminal établissent alors mutuellement une session de communication sécurisée. Pour l'établissement de cette session de communication sécurisée entre le dispositif de transmission et le terminal, le dispositif de transmission utilise au moins une partie des données de gestion. L'établissement de la session sécurisée permet d'une part l'envoi de messages par le terminal et la réception de ces messages par le dispositif de transmission et d'autre part l'envoi de messages par le dispositif de transmission et la réception de ces messages par le terminal.

Suite à l'établissement de la session sécurisée, les messages émis par le terminal via la deuxième liaison de communication et reçus par le dispositif de transmission sont retransmis par le dispositif de transmission via la première liaison de communication à un serveur du réseau. Réciproquement, les messages émis via la première liaison de communication par un serveur du réseau à destination du terminal sont reçus par le dispositif de transmission et retransmis par celui-ci via la deuxième liaison de communication et plus particulièrement via la session de communication sécurisée au terminal.

Dans cette première phase lors de laquelle le terminal est hors de la couverture radio de tout équipement passerelle du réseau, le dispositif de transmission établit, grâce aux données de gestion, la session de communication de la même manière que l'aurait fait un serveur du réseau si la demande de connexion lui était parvenue. Aussi, pour l'établissement de la session de communication, le dispositif de transmission joue le rôle d'un serveur du réseau.

Selon la présente invention, le réseau est un réseau de type LoRa^{™}, l'établissement de la session par le dispositif de transmission permet à ce dernier de répondre au terminal dans un délai correspondant aux attentes du terminal. En effet, selon le protocole LoRaWAN^{™}, le terminal est configuré pour recevoir une réponse à une demande de connexion dans un délai prédéfini. Au-delà de ce délai, il n'est plus en écoute d'une réponse.

Après l'établissement de la session, le dispositif de transmission joue le rôle de relai pour ce terminal pour lequel il a reçu des droits de gestion.

Ainsi, grâce au dispositif de transmission, un terminal situé hors de la zone de couverture radio de tout équipement passerelle du réseau peut communiquer avec au moins un serveur de ce réseau.

Lors d'une seconde phase, le terminal est situé dans la zone de couverture d'un équipement passerelle du réseau tout en restant positionné dans la zone de couverture du dispositif de transmission. Ce changement de situation est par exemple dû à l'installation d'un équipement passerelle supplémentaire ou au déplacement du terminal.

Cet équipement passerelle est apte à transmettre à au moins un serveur du réseau, les signaux émis par le terminal et à transmettre au terminal les signaux transmis par un serveur du réseau, à destination du terminal.

Afin d'éviter que les messages échangés entre le terminal et un serveur du réseau transitent d'une part via le dispositif de transmission et d'autre part par l'équipement passerelle nouvellement accessible, un message de demande de fin de gestion du terminal est envoyé au dispositif de transmission. Ce message signale au dispositif de transmission qu'il ne doit plus assurer la gestion de ce terminal et, en conséquence, retirer ce terminal de la liste des terminaux qu'il gère.

Grâce au retrait du terminal de la liste des terminaux gérés par le dispositif de transmission, les messages émis par le terminal ne sont plus retransmis par le dispositif de transmission. Réciproquement, les messages destinés au terminal et reçus par le dispositif de transmission ne sont plus transmis par ce dernier au terminal.

Ainsi, seul l'équipement passerelle nouvellement accessible sert de relai à ces messages.

Le procédé permet ainsi le passage d'une gestion par le dispositif de transmission à une gestion via l'équipement passerelle nouvellement accessible, sans transiter par le dispositif de transmission sans nécessiter de modifications au niveau du terminal. Cette procédure est transparente pour le terminal.

Avantageusement, les liaisons de communications entre les différents serveurs et entre un serveur du réseau et un équipement passerelle sont des liaisons filaires ou cellulaires classiques.

Cependant, aucune limitation n'est apportée au type de ces liaisons.

Selon l'invention actuelle, la liaison entre le dispositif de transmission et le terminal est une liaison radio longue portée selon la technologie LoRa^{™}. Ainsi, les terminaux configurés pour respecter le protocole LoRaWAN^{™} peuvent accéder via un réseau LoRa^{™} à des serveurs applicatifs via le dispositif de transmission sans qu'il soit nécessaire de les adapter.

Cependant, la liaison entre le dispositif de transmission et le terminal peut être une liaison radio ayant des caractéristiques différentes, par exemple une liaison radio courte portée.

Selon un mode de réalisation particulier du procédé de gestion, suite à la réception de ladite demande, le dispositif de transmission émet à destination dudit terminal une demande d'émission par ledit terminal d'une deuxième demande de connexion.

La réception de ce message de demande de fin de gestion par le dispositif de transmission déclenche l'envoi d'un message par ce dispositif de transmission à destination du terminal. Ce message indique au terminal qu'il doit réémettre une nouvelle demande de connexion.

Lors de l'émission de la nouvelle demande de connexion par le terminal, le dispositif de transmission ne traite pas cette demande. La demande de connexion est seulement prise en compte par l'équipement passerelle nouvellement accessible par le terminal.

L'émission d'une nouvelle demande de connexion permet l'établissement d'une nouvelle session de communication entre le terminal et un serveur du réseau. Ceci permet de renforcer la sécurité du système.

Selon une caractéristique particulière du procédé de gestion, l'établissement de la session sécurisée comporte une génération d'une clé de session partagée entre le dispositif de transmission et le terminal, ladite clé étant générée à partir d'au moins une partie des données de gestion.

Grâce aux données de gestion obtenues par le dispositif de transmission, la clé de session est générée par le dispositif de transmission comme si elle l'était par un serveur du réseau.

Dans un mode de réalisation particulier, les données de gestion comprennent une clé principale connue du réseau, et plus précisément d'au moins un serveur du réseau, et transmise au dispositif de transmission. La clé de session est générée à partir de la clé principale. Cette clé de session est par ailleurs générée par le terminal qui possède également la clé principale.

Ainsi, grâce à l'obtention de la clé principale, le dispositif de transmission peut jouer le rôle d'un serveur du réseau pour générer la clé de session.

Selon un mode de réalisation particulier du procédé de gestion, ladite demande de fin de gestion est reçue via ledit équipement passerelle et via ledit serveur réseau.

La transmission de la demande de fin de gestion via ledit équipement passerelle et via ledit serveur réseau est simple à mettre en œuvre.

Ainsi, le dispositif de transmission reçoit la demande de gestion via une liaison radio. Il n'est donc pas nécessaire de prévoir d'autres moyens de communication, tels que par exemple une liaison filaire, une liaison 4G...entre le dispositif de transmission et le serveur de gestion.

Selon un mode de réalisation particulier du procédé de gestion, la demande de fin de gestion est transmise au dispositif de transmission via une session de communication sécurisée établie entre le dispositif de transmission et un serveur dudit réseau.

Ceci permet une transmission sécurisée de la demande de fin de gestion.

Selon un mode de réalisation particulier du procédé de gestion, la demande d'émission est émise en réponse à un message émis par ledit terminal via la session de communication établie entre le terminal et le dispositif de transmission.

Dans ce mode de réalisation, le terminal est à l'initiative de l'échange de messages, et les serveurs du réseau ne peuvent communiquer avec le terminal qu'en réponse à un message émis par celui-ci. Cela évite ainsi aux terminaux de devoir rester en permanence à l'écoute, ce qui est consommateur en énergie. Le dispositif de transmission est vu par le réseau comme un terminal.

Selon un mode de réalisation particulier du procédé de gestion, le terminal est retiré de la liste après réception d'un accusé de réception émis par le terminal en réponse à la demande d'émission.

Ainsi, le dispositif de transmission assure la gestion de ce terminal jusqu'à ce qu'il ait confirmation que sa demande de reconnexion a été reçue par le terminal. Cela permet d'éviter une perte des messages de données.

Selon un mode de réalisation particulier du procédé de gestion, la réception de la demande de fin de gestion est suivie d'un envoi d'une demande de type New Channel définie dans le standard LoRaWAN^{™}.

L'envoi de ce message permet de transmettre des paramètres de configuration au terminal. Ces paramètres de configuration permettent au terminal d'adapter la configuration des signaux radios émis ou reçus par le terminal.

L'envoi de ce message permet notamment d'invalider des canaux de fréquence spécifiques au dispositif de transmission et non utilisés par les équipements passerelle du réseau.

Selon un mode de réalisation particulier du procédé de gestion, lesdits messages de données émis par le terminal comprennent des données chiffrées ou signées avec la clé de session partagée par le terminal et le dispositif de transmission.

Selon un mode de réalisation particulier du procédé de gestion, le procédé comporte une étape de transmission à un serveur du réseau de données relatives à la clé de session générée.

La transmission de ces données permet au serveur du réseau de disposer de la clé de session. Cela permet ainsi au serveur du réseau de déchiffrer et/ou vérifier la signature des messages émis par le terminal et retransmis par le dispositif de transmission. De façon réciproque, cela permet au serveur du réseau de chiffrer et/ou signer les messages émis à destination du terminal.

Ainsi, grâce aux données relatives à la clé de session transmises, le terminal et le serveur du réseau se comportent comme si le dispositif de transmission ne relayait pas les messages.

Tout se passe comme si, la clé de session avait été générée par un serveur du réseau.

Les données relatives à la clé de session sont la clé de session.

A titre d'alternative, les données relatives à la clé de session sont des données utilisées par le dispositif de transmission pour générer la clé de session. Elles permettent au serveur du réseau de générer la même clé de session.

Les données transmises peuvent également comprendre des données générées par le dispositif de transmission lors de l'établissement de la session, par exemple une adresse du terminal.

Plus généralement, les données transmises sont des données générées par le dispositif de transmission ou reçues du terminal pendant la phase d'établissement de la session.

L'invention se rapporte également à un produit programme d'ordinateur, non couvert par la présente invention, comprenant des instructions pour la mise en œuvre d'un procédé de gestion, non couvert par la présente invention, tel que décrit précédemment, lorsque ce programme est exécuté par un processeur.

L'invention concerne ainsi un logiciel ou programme, non couvert par la présente invention, susceptible d'être exécuté par un ordinateur ou par un processeur de données, ce logiciel / programme comportant des instructions pour commander l'exécution des étapes d'un procédé de gestion. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en œuvre par une ou plusieurs machines physiquement distinctes et présente globalement l'architecture d'un ordinateur, incluant des constituants d'une telle architecture : mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant un système dans un premier état de configuration et selon un mode de réalisation particulier de l'invention ;
- la figure 2 est un schéma illustrant le système de la figure 1 dans un deuxième état de configuration ;
- la figure 3 est un schéma représentant un dispositif de transmission apte à mettre en œuvre un procédé de gestion selon un mode de réalisation de l'invention ;
- la figure 4 est un organigramme illustrant les différentes étapes d'un procédé de gestion selon un mode de réalisation particulier de l'invention.

L'invention est mise en œuvre au moyen de composants logiciels et/ou matériels, non couvert par la présente invention. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

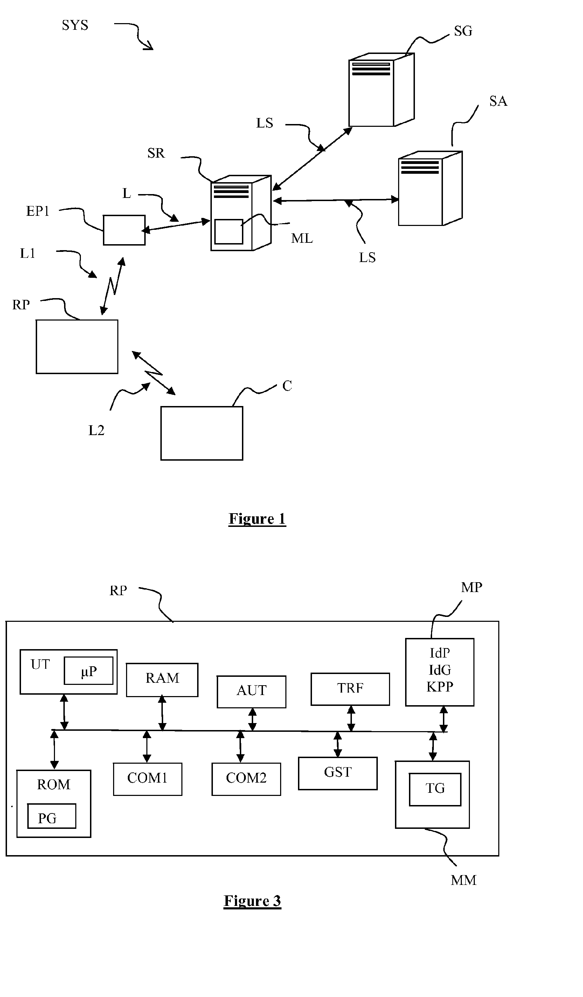

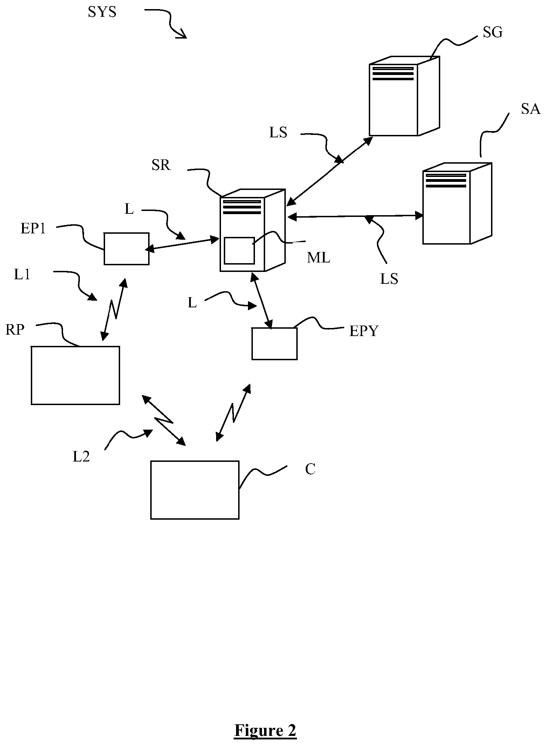

La **figure** 1 et la **figure** 2 représentent un système de communication SYS conforme à l'invention, dans un mode particulier de réalisation.

Dans l'exemple envisagé, le système de communication SYS s'appuie sur un réseau de télécommunications étendu mettant en œuvre le protocole LoRaWAN^{™}. De façon connue, le protocole LoRaWAN^{™} est particulièrement bien adapté dans le contexte de l'Internet des Objets pour permettre à divers objets communicants d'échanger avec des serveurs sur Internet.

Aucune limitation n'est attachée à la nature des objets communicants. Il peut s'agir de terminaux divers tels que des capteurs, des actionneurs, ou tout autre type d'objet. De façon connue, de tels objets, par leurs contraintes matérielles et/ou logicielles, ne peuvent pas se connecter par des réseaux d'accès classiques tels que Wifi, cellulaire ou filaire au réseau Internet pour accéder aux serveurs applicatifs auxquels ils sont rattachés : ils communiquent avec ces serveurs par l'intermédiaire d'un réseau de télécommunications adapté à leurs contraintes, tel que LoRaWAN^{™}, selon une topologie en étoile.

Le système de communication SYS comprend au moins un dispositif de transmission RP, au moins un terminal C, au moins un équipement passerelle, un serveur réseau SR, un serveur de gestion SG et au moins un serveur applicatif SA.

Le serveur de gestion SG est un serveur applicatif associé au dispositif de transmission RP.

Le système de communication SYS comprend par exemple un équipement passerelle EP1.

Aucune limitation n'est attachée au nombre de serveurs applicatifs, au nombre de dispositifs de transmission, au nombre d'équipements passerelle ou au nombre de terminaux.

Le serveur réseau SR est apte à communiquer d'une part avec le serveur de gestion SG et d'autre part avec le serveur applicatif SA via une liaison LS.

La liaison LS est par exemple une liaison filaire.

La liaison LS est de préférence sécurisée.

Chaque équipement passerelle est apte d'une part à communiquer avec un ou plusieurs terminaux via un lien radio et d'autre part, à communiquer avec le serveur réseau SR ou d'autres équipements du réseau via une liaison de communication L.

La liaison de communication L est par exemple une liaison filaire ou cellulaire.

Aucune limitation n'est apportée ni au type de la liaison LS ni au type de la liaison L.

De façon connue, le serveur réseau SR est chargé de filtrer et de contrôler l'intégrité et l'authenticité des messages reçus via la liaison L avant de les transmettre aux serveurs applicatifs concernés.

Le serveur réseau SR a également accès à une mémoire ML contenant une liste LT des terminaux connectés. La liste LT comprend notamment pour chaque terminal connecté, un identifiant dudit terminal en association avec des informations relatives à une session de communication établie pour ce terminal. Ces informations sont par exemple un identifiant du serveur applicatif avec lequel il est connecté, une ou plusieurs clés de session, une adresse attribuée au terminal connecté ... Par terminal connecté, on entend ici un terminal pour lequel une session de communication a été établie et est toujours en cours.

Les informations contenues dans la liste LT permettent au serveur réseau SR d'effectuer des contrôles d'intégrité avant de transmettre ou non un message reçu.

Les informations enregistrées pour un terminal connecté sont par exemple retirées de la liste LT en fin de session de communication.

Les données échangées entre les différents serveurs SR, SA et SG du réseau sont indifféremment chiffrées avec des clés partagées ou des paires de clés privées-publiques ou tout autre procédé de chiffrement ou transmises en clair. Aucune limitation n'est apportée à la façon dont ces données sont échangées.

Le terminal C est un objet communiquant.

Plus précisément, le terminal C est configuré pour émettre et à recevoir des données via un lien radio.

Le terminal C est par exemple un compteur d'eau.

Le serveur applicatif SA est par exemple un serveur d'un fournisseur d'eau apte à traiter les données remontées par le compteur d'eau C et à fournir un service applicatif. Ce service applicatif est par exemple l'élaboration d'une facture à partir des données remontées et la fourniture de cette facture à un utilisateur associé au compteur C. L'utilisateur peut par ailleurs se voir fournir un historique détaillé de ses consommations sur un portail web du fournisseur d'eau...

Le terminal C est configuré pour communiquer avec le serveur applicatif SA via le serveur réseau SR, et via éventuellement des passerelles ou stations de base.

Cela signifie que lorsqu'il est installé dans une zone de couverture radio d'un équipement passerelle, il peut communiquer avec le serveur applicatif SA via une liaison radio entre le terminal et cet équipement passerelle, via cet équipement passerelle, la liaison L, le serveur réseau SR et la liaison LS.

A cet effet, le terminal C comporte une mémoire dans laquelle ont été enregistrés lors d'une phase préalable d'initialisation, un identifiant IdC du terminal C, un identifiant IdS du serveur applicatif SA associé au terminal C et une clé cryptographique principale (ou maîtresse) KPC. La clé principale KPC est par exemple stockée dans une mémoire sécurisée du terminal C.

La clé principale KPC est également stockée dans une mémoire accessible par le serveur réseau R, par exemple une mémoire sécurisée du serveur réseau SR, par exemple en association avec l'identifiant IdC du terminal C et l'identifiant IdS du serveur applicatif SA.

Le dispositif de transmission RP, est configuré pour communiquer avec le serveur de gestion SG via le serveur réseau SR, et via éventuellement des passerelles ou stations de base.

Dans l'exemple représenté ici, le dispositif de transmission RP est situé dans la zone de couverture radio de l'équipement passerelle EP1 et communique avec l'équipement passerelle EP1 via une liaison radio L1.

La liaison radio L1 représente une première liaison de communication au sens de l'invention.

Le dispositif de transmission RP communique avec le serveur de gestion SG via la liaison radio L1 entre le dispositif de transmission RP et l'équipement passerelle EP1, via l'équipement passerelle EP1, la liaison L, le serveur réseau SR et la liaison LS.

Le dispositif de transmission RP est également apte à recevoir les signaux radio émis par un ou plusieurs terminaux pour lesquels il a obtenu des droits de gestion, par exemple sous la forme d'une demande de gestion telle que décrite ultérieurement. Il est également apte à émettre des signaux radio destinés à ce ou ces terminaux.

La figure 1 représente un exemple d'un premier état de configuration du système SYS.

Sur cette figure, le terminal C est situé à portée radio du dispositif de transmission RP. Il est situé hors de portée radio de l'équipement passerelle EP1 et ne peut communiquer directement ni avec cet équipement passerelle EP1, ni avec d'autres équipements passerelle du système SYS.

Les signaux radio émis par le terminal C ne parviennent pas jusqu'à un équipement passerelle du réseau. Ils ne parviennent pas non plus directement au serveur réseau SR.

Le terminal C est par exemple situé en sous-sol, par exemple dans une cave d'un immeuble, dans un bâtiment en tôle...

Cependant, le terminal C étant situé dans la zone de couverture radio du dispositif de transmission RP, le terminal C et le dispositif de transmission RP communiquent via une liaison radio L2.

Dans le mode de réalisation décrit, les liaisons radio L1 et L2 sont des liens selon la technologie bas débit et basse consommation LoRa^{™}. Les signaux radio émis et reçus sont des signaux bas débit (inférieurs à 50Kbits/s) de longue portée (ie de type Long range).

A titre d'alternative, une ou plusieurs des liaisons L1 et L2 sont de liaisons radio de type différent.

La figure 2 représente un exemple d'un deuxième état de configuration du système SYS.

Comme illustré sur la figure 2, un équipement passerelle supplémentaire EPY a été ajouté et le terminal C est maintenant situé à portée radio de l'équipement passerelle EPY tout en restant à portée du dispositif de transmission RP.

A titre d'alternative, l'équipement passerelle EPY était initialement installé au sein du système SYS et le terminal se retrouve situé à portée de cet équipement passerelle EPY suite à un déplacement du terminal C tout en restant à portée du dispositif de transmission RP.

Comme illustré sur la **figure** 3, le dispositif de transmission RP comporte de façon connue, notamment une unité de traitement UT équipée d'un microprocesseur, une mémoire morte de type ROM, une mémoire vive de type RAM.

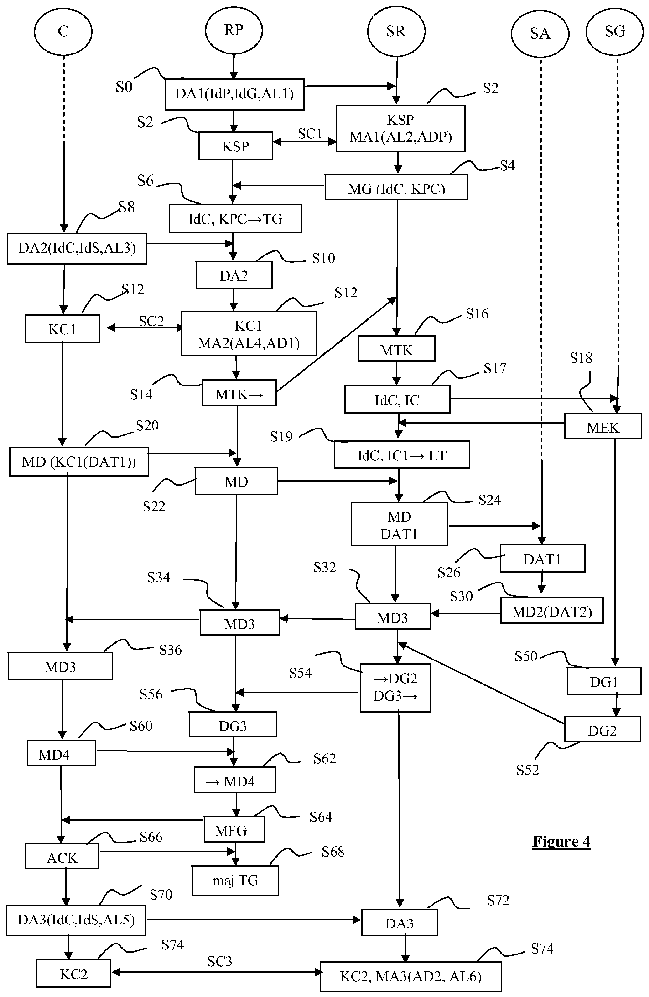

La mémoire morte de type ROM comporte des registres mémorisant un programme d'ordinateur PG comportant des instructions de programme adaptées à mettre en œuvre un procédé de gestion selon un mode de réalisation de l'invention décrit ultérieurement en référence à la figure 4.

Le dispositif de transmission RP comporte également une mémoire MP, par exemple une mémoire sécurisée, dans laquelle ont été enregistrés lors d'une phase préalable d'initialisation, par exemple lors de son installation, un identifiant IdP du dispositif de transmission RP, l'identifiant IdG du serveur de gestion SG associé au dispositif de transmission RP et la clé cryptographique principale (ou maîtresse) KPP. La clé principale KPP est une clé associée au serveur de gestion SG. Elle est partagée par le dispositif de transmission RP et par le serveur réseau SR.

La clé principale KPP est également stockée dans une mémoire sécurisée du serveur réseau SR, par exemple en association avec l'identifiant IdP du dispositif de transmission RP et l'identifiant IdG du serveur de gestion SG.

Le dispositif de transmission RP comporte également un premier module de communication COM1 et un deuxième module de communication COM2.

Le premier module de communication COM1 est configuré pour recevoir et émettre des signaux radios émis via la liaison L1, typiquement entre le dispositif de transmission et l'équipement passerelle EP1.

Le deuxième module de communication COM2 est configuré pour recevoir et émettre des signaux radios émis via la liaison L2, typiquement entre le dispositif de transmission RP et le terminal C.

Les modules COM1 et COM2 peuvent optionnellement être un seul et même module.

Le dispositif de transmission RP comporte également un module d'authentification AUT, un module de transfert TRF et un module de gestion GST.

Le dispositif de transmission RP contient également une mémoire MM dans laquelle a été préalablement enregistrée une liste TG de terminaux gérés par le dispositif de transmission RP. La mémoire MM contient pour chaque terminal de la liste TG, un identifiant de terminal et des données de gestion associées. Les données de gestion représentent des droits de gestion au sens de l'invention.

Un premier mode de réalisation d'un procédé de gestion mis en œuvre dans le système SYS, va maintenant être décrit en référence à la **figure 4****.**

Dans ce mode de réalisation, il est supposé que la liste TG contient au moins un terminal, par exemple le terminal C. Plus précisément, la liste TG contient l'identifiant IdC du terminal C et des données de gestion DG.

Les données de gestion DG associées au terminal C contiennent notamment la clé principale KPC associée au terminal C.

La liste TG est par exemple initialisée lors d'une phase d'installation du dispositif de transmission RP. Un terminal peut être ajouté à la liste TG par envoi d'une commande émise par le serveur de gestion SG.

Aucune limitation n'est apportée à l'inscription d'un nouveau terminal dans la liste. La procédure d'inscription doit cependant être sécurisée pour éviter des attaques visant la confidentialité des données échangées par les terminaux, ou l'authentification des terminaux eux-mêmes par le réseau.

Lors d'une étape S0, le module d'authentification AUT du dispositif de transmission RP transmet au serveur réseau SR, une requête de connexion DA1. La requête de connexion DA1 est émise par le dispositif de transmission RP, via la liaison radio L1. Elle est relayée au serveur de réseau SR par l'équipement passerelle EP1 via la liaison L.

La requête de connexion DA1 contient l'identifiant IdP du dispositif de transmission RP, l'identifiant IdG du serveur de gestion SG avec lequel le dispositif de transmission RP demande à être connecté et une valeur aléatoire AL1 générée par le dispositif de transmission RP.

La requête de connexion DA1 est par exemple un message JoinRequest défini dans le standard LoRaWAN^{™}.

Lors d'une étape S2, suite à la réception de la requête DA1, le dispositif de transmission RP et le serveur réseau SR établissent une session de communication SC1.

L'établissement de la liaison de communication SC1 comporte une étape d'authentification réalisée d'une part par le dispositif de transmission RP et d'autre part par le serveur réseau SR.

Plus précisément, le serveur réseau SR génère une valeur aléatoire AL2. Puis, il génère une clé de session KSP par application d'une fonction mathématique prédéfinie F1 aux paramètres suivants : la clé principale KPP, la valeur aléatoire AL1 reçue, la valeur aléatoire AL2.

La génération d'une clé de session, appelée également clé dérivée, à partir d'une clé principale (ou maîtresse) est une technique connue de l'homme du métier et ne sera pas décrite ici.

La fonction F1 est par exemple une fonction AES (pour « Advanced Encryption Standard »).

Aucune limitation n'est apportée à la fonction F1.

Le serveur réseau SR génère également une adresse ADP pour le dispositif de transmission RP.

A titre d'alternative, l'adresse ADP n'est pas générée.

Puis, le serveur réseau SR génère et émet, en réponse à la demande d'authentification DA1, un message MA1 d'acceptation de la connexion. Le message MA1 contient notamment la valeur aléatoire AL2 et l'adresse ADP générée. Il peut également contenir des paramètres de connexion tels que par exemple une liste de canaux valides pour communiquer via la liaison L1 et/ou une liste de canaux à invalider et/ou un temps de réponse maximum dans lequel une réponse à un message émis par le terminal doit être reçue. Ce temps de réponse est par exemple de 1 seconde.

Le message MA1 est par exemple un message JoinAccept défini dans le standard LoRaWAN^{™}.

Des informations relatives à la connexion, c'est-à-dire à la session SC1 établie, sont enregistrées en association avec un identifiant du dispositif de transmission RP, par exemple l'identifiant IdP, par le serveur réseau SR dans une mémoire accessible par le serveur réseau SR, par exemple dans la liste LT des terminaux connectés.

Ces informations sont par exemple l'identifiant IdG du serveur de gestion SG et la clé de session générée KSP.

Suite à la réception du message MA1, le module d'authentification AUT du dispositif de transmission RP génère à son tour la clé de session KSP. La clé de session KSP est générée par application de la fonction F1 à la clé principale KPP stockée dans la mémoire MP du dispositif de transmission RP, de la première valeur aléatoire AL1 générée par le dispositif de transmission RP et de la deuxième valeur aléatoire AL2 reçue dans le message MA1.

Dans le mode de réalisation décrit, l'établissement de session comporte une authentification mutuelle du dispositif de transmission RP et du serveur réseau SR.

A titre d'alternative, la clé de session KSP est par exemple générée par un dispositif de sécurité (non représenté) et préalablement enregistrée d'une part dans le dispositif de transmission RP et d'autre part, dans le serveur réseau SR.

Suite à l'étape S2, le dispositif de transmission RP et le serveur réseau SR possèdent respectivement la même clé de session KSP. En d'autres termes, la clé de session KSP est partagée par le dispositif de transmission RP et le serveur réseau SR pour la session de communication entre le dispositif de transmission RP et le serveur réseau SR.

De façon connue, l'établissement de la session SC1 permet au dispositif de transmission RP de transmettre des messages de données à destination du serveur de gestion SG. Les messages de données contiennent l'identifiant IdP du dispositif de transmission RP, l'identifiant IdG du serveur de gestion SG et des données chiffrées avec la clé de session KSP. Les messages de données sont reçus par le serveur réseau SR qui déchiffre les données avec sa clé de session KSP. Le serveur réseau SR transmet ensuite, via la liaison LS, les données déchiffrées au serveur de gestion SG associé au dispositif de transmission RP.

De façon réciproque, le serveur de gestion SG peut transmettre un message en réponse à un message reçu du dispositif de transmission RP. Ce message est transmis par le serveur de gestion SG au serveur réseau SR qui chiffre son contenu avec la clé de session KSP avant de le transmettre à destination du dispositif de transmission RP.

L'étape S2 est suivie d'une étape S4 lors de laquelle le serveur réseau SR envoie un message MG destiné au dispositif de transmission RP.

Le message MG contient l'identifiant IdC du terminal C, l'identifiant IdS du serveur applicatif SA associé au terminal C et la clé principale KPC associée à ce terminal.

A titre d'alternative, le message MG ne comprend pas l'identifiant IdS.

Egalement, à titre d'alternative, le message MG comprend d'autres données.

Le message MG est transmis au dispositif de transmission RP via l'équipement passerelle EP1.

Les données du message MG sont chiffrées avec la clé de session KSP par le serveur réseau SR.

Le message MG est par exemple généré par le serveur réseau SR suite à la réception par le serveur réseau SR d'une demande de gestion du terminal C par le dispositif de transmission RP émise par le serveur de gestion SG.

Le message MG est une demande de gestion du terminal C. Les données contenues dans le message MG représentent des données de gestion DG associées au terminal C.

Le message MG est par exemple transmis au dispositif de transmission RP en réponse à un message d'interrogation émis par le dispositif de transmission RP.

L'étape S4 est suivie d'une étape S6 lors de laquelle, suite à la réception du message MG par le premier module COM1 de communication du dispositif de transmission RP, le module de gestion GST du dispositif de transmission RP obtient, à l'aide de la clé de session KSP précédemment calculée, les données contenues dans le message MG, notamment l'identifiant IdC du terminal C, l'identifiant IdS du serveur SA et la clé principale KPC associée à ce terminal. Puis, il enregistre ces données dans une mémoire du dispositif de transmission RP.

Dans le mode de réalisation décrit, ces données sont enregistrées dans la liste TG de terminaux gérés par le dispositif de transmission RP. La liste TG contient pour chaque terminal géré par le dispositif de transmission RP, un identifiant dudit terminal et des données de gestion DG associées. L'identifiant IdS et la clé principale KPC représentent ici des données de gestion DG au sens de l'invention.

A titre d'alternative, l'identifiant IdC, l'identifiant IdS et la clé principale KPC associée sont enregistrés dans le dispositif de transmission RP lors d'une phase d'initialisation préalable à l'établissement de la session SC1. Il n'est alors pas nécessaire pour le serveur réseau SR de transmettre ces données.

Lors d'une étape S8, le terminal C émet via la deuxième liaison L2 de communication, une requête de connexion DA2 au serveur applicatif SA.

La requête de connexion DA2 contient l'identifiant IdC du terminal C, l'identifiant IdS du serveur applicatif SA avec lequel le terminal C demande à être connecté et une valeur aléatoire AL3 générée par le terminal C.

La requête de connexion DA2 est par exemple un message JoinRequest défini dans le standard LoRaWAN^{™}.

La requête DA2 est reçue par le deuxième module COM2 de communication du dispositif de transmission RP lors d'une étape S10. Egalement, lors de l'étape S10, le dispositif de transmission RP, via son module de gestion GST, vérifie que la requête DA2 est émise par un terminal de la liste TG des terminaux pour lesquels il a reçu des droits de gestion.

Dans le cas où le terminal ayant émis la requête DA2 ne figure pas dans la liste TG des terminaux gérés par le dispositif de transmission RP, le dispositif de transmission RP ne traite pas la requête DA2.

Le terminal C, et plus précisément l'identifiant IdC du terminal C, figurant dans la liste TG, l'étape S10 est suivie d'une étape S12 lors de laquelle une session de communication SC2 est établie entre le terminal C et le dispositif de transmission RP.

Plus précisément, suite à la réception de la requête de connexion DA2, le module d'authentification AUT du dispositif de transmission RP génère une valeur aléatoire AL4, une clé de session KC1 et une adresse AD1 pour le terminal C. La clé de session KC1 est générée de façon classique en utilisant la clé principale KPC associée au terminal C, la valeur aléatoire reçue AL3 et la valeur aléatoire AL4.

Puis, le dispositif de transmission RP génère et transmet via le module de communication COM2, un message MA2 d'acceptation de la connexion. Le message MA2 contient notamment la valeur aléatoire AL4 et l'adresse AD1 générée. Il peut également contenir des paramètres de configuration du terminal C.

Le message MA2 est par exemple un message JoinAccept défini dans le standard LoRaWAN^{™}.

Suite à la réception du message MA2, le terminal C génère à son tour la clé de session KC1.

Ainsi suite à l'étape S12, le terminal C d'une part et le dispositif de transmission RP possèdent la même clé de session KC1. En d'autres termes, la clé de session KC1 est partagée par le terminal C et le dispositif de transmission RP.

Lors d'une étape S14, suivant l'étape S12, le premier module COM1 de communication du dispositif de transmission RP émet un message MTK, via la liaison L1.

Le message MTK contient l'identifiant IdC du terminal C, la clé de session KC1 générée par le dispositif de transmission RP et l'adresse AD1 générée. Les données contenues dans le message MTK sont chiffrées avec la clé de session KSP partagée entre le dispositif de transmission RP et le serveur réseau SR.

En variante, le message MTK ne contient pas la clé KC1 et le message MTK contient des données permettant au serveur réseau SR de générer cette clé KC1, c'est-à-dire notamment la première valeur aléatoire AL3 et la deuxième valeur aléatoire AL4.

Dans un mode de réalisation particulier, le dispositif de transmission RP commande l'effacement dans sa mémoire, de la clé KC1 précédemment générée, par exemple après envoi du message MTK.

A titre d'alternative, la clé KC1 reste stockée dans une mémoire du dispositif de transmission RP.

Le message MTK est reçu par le serveur réseau SR lors d'une étape S16.

L'étape S16 est suivie d'une étape S17 lors de laquelle le serveur réseau SR obtient la clé de session KC1 et l'adresse AD1 par déchiffrement des données du message MTK à l'aide de la clé KSP stockée dans une de ses mémoires.

Les données ainsi obtenues sont transmises au serveur de gestion SG, qui les analyse et génère et transmet au serveur réseau SR, un message MEK de demande d'enregistrement du terminal C dans la liste LT des terminaux connectés (étape S18).

Plus précisément, le message MEK est une demande d'enregistrement dans la liste TG, de l'identifiant IdC et d'informations IC1 relatives à la session de communication SC2.

Les informations IC1 sont par exemple l'identifiant IdS du serveur applicatif SA, la clé de session KC1 et l'adresse AD1.

Lors d'une étape S19, le serveur réseau SR reçoit le message MEK et enregistre le terminal C dans la liste LT des terminaux connectés. Par exemple, le serveur réseau SR enregistre en association avec l'identifiant IdC du terminal C, les informations IC1 relatives à la session de communication SC2.

A titre d'alternative, le message MTK est transmis au serveur de gestion SG par le serveur réseau SR et les données du message MTK sont déchiffrées par le serveur de gestion SG.

Lors d'une étape S20, réalisée après les étapes décrites précédemment, le terminal C ayant des données DAT1 à transmettre au serveur applicatif SA, génère et émet un message MD, via la liaison de communication L2.

Les données DAT1 sont par exemple des données de mesure obtenues par le terminal C.

Plus généralement, les données DAT1 sont des données que le terminal C souhaite transmettre au serveur applicatif SA.

Aucune limitation n'est apportée au type des données DAT1 du message de données MD.

Le message MD contient l'identifiant IdS du serveur applicatif SA, l'adresse AD1 du terminal C ainsi que les données DAT1 chiffrées avec la clé de session générée KC1 générée par le terminal C. Le message MD peut également contenir l'identifiant IdC du terminal C.

Le message MD est reçu par le deuxième module de communication COM2 du dispositif de transmission RP lors d'une étape S22.

Egalement lors de l'étape S22, le module de gestion GST du dispositif de transmission RP vérifie que le message MD provient du terminal C.

Si la vérification est positive, le module de transfert TRF du dispositif de transmission RP commande l'émission du message MD par le premier module COM1 de communication du dispositif de transmission RP.

Le message de données MD émis par le terminal C et reçu par le dispositif de transmission RP est ainsi réémis par ce dernier.

Si la vérification est négative, par exemple si le message MD reçu par le dispositif de transmission RP est un message émis par un terminal pour lequel le dispositif de transmission RP n'a pas reçu de droits, par exemple l'identifiant de terminal et la clé principale du terminal, le message n'est pas réémis par le dispositif de transmission RP.

Le message MD, réémis, via la liaison L1, par le premier module COM1 du dispositif de transmission RP est reçu par le serveur réseau SR lors d'une étape S24.

Le serveur réseau SR vérifie alors que le terminal C est inscrit dans la liste LT de terminaux connectés.

Si tel est le cas, à l'aide des données IC1 enregistrées en association avec l'identifiant IdC du terminal C dans la liste LT, le serveur réseau SR peut effectuer des contrôles d'intégrité du message MD.

Si le terminal n'est pas inscrit dans la liste LT ou si le serveur réseau SR considère que les contrôles ne sont pas satisfaisants, le message MD n'est pas transmis au serveur applicatif SA.

Sinon, également lors de l'étape S24, les données DAT1 sont obtenues par le serveur réseau SR par déchiffrement du message MD à l'aide de la clé de session KC1 enregistrée en association avec l'identifiant IdC du terminal C dans la liste LT.

Le serveur réseau SR transmet ensuite les données DAT1 au serveur applicatif SA (étape S24) et les données DAT1 sont reçues par le serveur applicatif SA lors d'une étape S26.

Dans le mode de réalisation décrit, lors de l'étape S22, le message MD est retransmis sans subir de traitement de la part du dispositif de transmission RP.

A titre d'alternative, le message MD est chiffré avec la clé de session KSP par le dispositif de transmission RP avant d'être transmis. Il est alors déchiffré par le serveur réseau SR à l'aide de la clé de session KSP.

Les étapes S20 à S26 peuvent être réitérées une ou plusieurs fois.

Une des étapes E26 peut être suivie d'une étape S30 lors de laquelle le serveur applicatif SA ayant des données DAT2 à transmettre au terminal C, génère et transmet un message MD2 à destination du terminal C.

Le message MD2 est reçu par le serveur réseau SR qui vérifie le message MD2, chiffre les données DAT2 avec la clé de session KC1. Puis le serveur réseau SR transmet un message MD3 contenant les données DAT2 chiffrées au dispositif de transmission RP via l'équipement passerelle EP1 (étape S32)

La transmission du message MD3 par le serveur réseau SR est par exemple réalisée suite à la réception par le serveur réseau SR d'un message en provenance du dispositif de transmission RP, généré par le dispositif de transmission RP ou par le terminal C.

L'étape S32 est suivie d'une étape S34 lors de laquelle le dispositif de transmission RP, via le premier module de communication COM1, reçoit le message MD3 et le module de transfert TRF du dispositif de transmission RP commande la réémission via la liaison de communication L2, par le deuxième module COM2 de communication, du message MD3 reçu.

Le message MD3 est reçu par le terminal C lors d'une étape E36.

Lors d'une étape S50, le serveur de gestion SG obtient une demande de fin de gestion DG1 relative au terminal C.

La demande de fin de gestion DG1 contient un identifiant du terminal C, par exemple l'identifiant IdC, et un identifiant du dispositif de transmission RP, par exemple l'identifiant IdP.

La demande de fin de gestion DG1 est par exemple transmise au serveur de gestion SG par le serveur applicatif SA ou le serveur réseau SR après constatation par celui-ci de la réception d'un nombre élevé de messages dupliqués. Cette situation est par exemple due au fait que le terminal C se trouve maintenant dans la zone de couverture de l'équipement passerelle EPY tout en restant dans la zone de couverture du dispositif de transmission RP (figure 2).

En effet, suite à l'installation de l'équipement passerelle EPY, les messages émis via la liaison L2 par le terminal C sont reçus d'une part par le dispositif de transmission RP et d'autre part, par l'équipement passerelle EPY.

Le dispositif de transmission RP transmet ces messages comme décrit précédemment au serveur réseau SR, via l'équipement passerelle EP1.

L'équipement passerelle EPY retransmet lui aussi ces messages au serveur réseau SR

Le serveur réseau SR peut ainsi constater la double réception des messages et alerter le serveur de gestion SG ou un opérateur.

A titre d'alternative, la demande de fin de gestion DG1 peut également être saisie par un opérateur au moyen d'une interface utilisateur du serveur de gestion SG ou d'un équipement apte à communiquer avec le serveur de gestion SG, suite par exemple à l'installation sur le terrain de l'équipement passerelle EPY.

Aucune limitation n'est apportée à la manière dont le serveur de gestion SG obtient la demande de fin de gestion DG1.

L'étape S50 est suivie d'une étape S52 lors de laquelle le serveur de gestion SG envoie au serveur réseau SR, une demande DG2 de fin de gestion du terminal C par le dispositif de transmission RP.

Dans le mode de réalisation décrit, le serveur de gestion SG envoie également au serveur réseau SR, une demande DRC de retrait du terminal C de la liste LT des terminaux connectés.

A titre d'alternative, la demande DRC n'est pas transmise.

La demande de fin de gestion DG2 contient l'identifiant IdC du terminal C. Elle peut également contenir l'identifiant IdP du dispositif de transmission RP.

L'étape S52 est suivie d'une étape S54 lors de laquelle le serveur réseau SR reçoit la demande DG2 et envoie à destination du dispositif de transmission RP, une demande DG3 de fin de gestion du terminal C correspondant à la demande de fin de gestion DG2.

La demande de fin de gestion DG3 est par exemple transmise au dispositif de transmission RP en réponse à un message transmis par celui-ci, par exemple un message d'interrogation.

La demande de gestion DG3 contient l'identifiant IdC du terminal C.

Les données de la demande de gestion DG3 sont chiffrées par le serveur réseau SR avec la clé de session KSP partagée par le dispositif de transmission RP et le serveur réseau SR.

Suite à la transmission du message DG3, le serveur réseau SR efface de la liste LT des terminaux connectés, l'identifiant IdC du terminal C ainsi que les informations IC1 enregistrées en association avec cet identifiant de terminal.

A titre d'alternative, la liste LT n'est pas mise à jour.

Suite à la réception de la demande de gestion DG3,via le premier module COM1 de communication du dispositif de transmission RP, le module de gestion GST du dispositif de transmission RP enregistre les valeurs contenues dans la demande de gestion DG3 dans une mémoire du dispositif de transmission RP (étape S56).

Ultérieurement, lors d'une étape S60, le terminal C envoie un message MD4 destiné au serveur applicatif SA. L'étape S60 est par exemple similaire à l'étape S36 décrite précédemment.

Le message MD4 est par exemple un message contenant des données, par exemple des données de mesure, chiffrées avec la clé de session KC1.

Le message MD4 est reçu par le deuxième module COM2 de communication du dispositif de transmission RP lors d'une étape S62.

Selon les modes de réalisation, le message MD4 est ou non être retransmis au serveur réseau SR par le dispositif de transmission RP.

L'étape S62 est suivie d'une étape S64 lors de laquelle le dispositif de transmission RP, ayant reçu le message de demande de fin de gestion DG3 via la première liaison de communication L1, transmet au terminal C un ou plusieurs messages MFG via la deuxième liaison de communication L2. Le ou les messages MFG sont par exemple transmis en réponse au message MD4. Ces messages MFG sont chiffrés avec la clé de session KC1.

Les messages MFG sont générés par le module de gestion GST et transmis par le deuxième module COM2 de communication du dispositif de transmission RP.

Ces messages contiennent des paramètres PAR de configuration du terminal et une demande DC d'émission, par le terminal C, d'une nouvelle demande de connexion.

La demande DC est par exemple formulée à l'aide de l'option « ForceRejoinReq » définie dans la version 1.1 du standard LoRaWAN^{™}.

A titre d'alternative, ces messages ne comprennent pas de paramètres de configuration de terminal.

Les paramètres de configuration PAR contenus dans le ou les messages MFG comprennent par exemple une liste de canaux supportés par l'équipement passerelle EPY et/ou une liste de canaux de fréquence à invalider car spécifiques au dispositif de transmission RP et non utilisés par l'équipement passerelle EPY.

La mise à jour de la liste des canaux est par exemple demandée sous la forme d'une demande « New Channel » définie dans le standard LoRaWAN^{™}.

Les paramètres de configuration PAR contenus dans le ou les messages MFG peuvent également comprendre une ou plusieurs valeurs de délais de réponse. Un tel délai de réponse est par exemple un intervalle de temps entre la fin de l'émission d'un message par le terminal C et le début d'une fenêtre de réception pendant laquelle le terminal C est en écoute d'une réponse.

La mise à jour de ce délai est par exemple demandée en utilisant une option « MAC RXTimingSetupReq » définie dans le standard LoRaWAN^{™}.

Suite à la réception du ou des messages MFG, le terminal C envoie un accusé de réception ACK des messages MFG (étape S66).

Le message ACK est reçu par le deuxième module COM2 du dispositif de transmission RP et suite à la réception du message ACK, le module de gestion GST du dispositif de transmission RP commande la suppression du terminal C de la liste TG des terminaux pour lequel il possède des droits de gestion (étape S68). Plus précisément, le dispositif de transmission RP supprime de la liste TG, l'identifiant IdC du terminal C et les informations enregistrées en association avec cet identifiant.

Suite à la réception de la demande DC contenue dans les messages MFG, le terminal C réémet une nouvelle demande de connexion DA3 (étape S70).

La requête de connexion DA3 contient l'identifiant IdC du terminal C, l'identifiant IdS du serveur applicatif SA avec lequel le terminal C demande à être connecté et une valeur aléatoire AL5 générée par le terminal C.

La requête de connexion DA3 est par exemple un message « JoinRequest » défini dans le standard LoRaWAN^{™}.

La requête DA3 est reçue par le deuxième module COM2 du dispositif de transmission RP mais le terminal C ne figurant plus dans la liste TG des terminaux gérés par le dispositif de transmission RP, la requête de connexion DA3 n'est pas prise en charge par le dispositif de transmission RP.

La requête DA3 est également reçue par la passerelle EPY qui la retransmet au serveur réseau SR (étape S72).

L'étape S72 est suivie d'une étape S74 lors de laquelle une session de communication SC3 est établie entre le terminal C et le serveur réseau SR, via l'équipement passerelle EPY..

Plus précisément, suite à la réception de la requête de connexion DA3, le serveur réseau SR génère une valeur aléatoire AL6, une clé de session KC2 et une adresse AD2 pour le terminal C. La clé de session KC2 est générée de façon classique en utilisant la clé principale KPC associée au terminal C, la valeur aléatoire reçue AL5 et la valeur aléatoire AL6.

Puis, le serveur réseau SR génère et transmet un message MA3 d'acceptation de la connexion. Le message MA3 contient notamment la valeur aléatoire AL6 et l'adresse AD2 générée. Il peut également contenir des paramètres de configuration du terminal.

Le message MA3 est par exemple un message JoinAccept défini dans le standard LoRaWAN^{™}.

Des informations relatives à la connexion, c'est-à-dire à la session SC3 établie, sont enregistrées par le serveur réseau SR dans la liste LT des terminaux connectés. Ces informations sont par exemple l'identifiant IdC du terminal C, l'identifiant IdS du serveur applicatif SA et la clé de session générée KC2.

Suite à la réception du message MA3, le terminal C génère à son tour la clé de session KC2.

De façon connue, l'établissement de la session SC3 permet au terminal C de transmettre des messages de données à destination du serveur applicatif SA. Les messages de données contiennent un identifiant IdC du terminal C et des données chiffrées avec la clé de session KC2. Les messages de données sont reçus par le serveur réseau SR qui déchiffre les données avec sa clé de session KC2 enregistrée dans la liste LT en association avec l'identifiant IdC du terminal C. Le serveur réseau SR transmet ensuite, via la liaison LS, les données déchiffrées au serveur applicatif SA associé au terminal C.

De façon réciproque, le serveur applicatif SA peut transmettre un message en réponse à un message reçu du terminal C. Ce message est transmis par le serveur applicatif SA au serveur réseau SR qui chiffre son contenu avec la clé de session KC2 avant de le transmettre à destination du terminal C.

Les étapes S0, S2, S6, S10, S12, S14, S22, S34, S56, S62, S64 et S68 mises en œuvre par le dispositif de transmission RP représentent des étapes du procédé de gestion selon un mode de réalisation de l'invention.

Dans le mode de réalisation décrit, le dispositif de transmission RP, suite à la réception de la demande DG3 de fin de gestion du terminal C, transmet via la liaison de communication L2, des messages MFG.

A titre d'alternative, le dispositif de transmission RP ne transmet pas de messages MFG.

Lors de la réception de messages transmis par le terminal C, le dispositif de transmission RP ne traite pas ces messages. Il agit alors comme s'il ne les recevait pas.

Le terminal C continue à émettre des messages chiffrés avec la clé de session KC1. Ces messages sont retransmis par l'équipement passerelle EPY au serveur réseau SR qui déchiffre ces messages. De même, le serveur réseau SR transmet au terminal C, via l'équipement passerelle EPY, des messages contenant des données générées par le serveur applicatif SA et chiffrées avec la clé KC1 par le serveur réseau SR.

Cette communication perdure jusqu'à ce que le terminal C émette une nouvelle demande de connexion. L'émission de cette nouvelle demande de connexion provoque l'établissement d'une nouvelle session de communication entre le terminal C et le serveur réseau SR, et en conséquence la génération d'une nouvelle clé de session.

Dans le mode de réalisation décrit, lors de l'établissement d'une session entre le terminal C ou le dispositif de transmission RP et un serveur applicatif, par exemple le serveur de gestion SG ou le serveur applicatif SA, l'authentification du terminal ou du dispositif de transmission est réalisée par le serveur réseau SR.

En variante, une telle authentification peut être réalisée par le serveur de gestion, le serveur applicatif SA ou un autre équipement du réseau, par exemple un serveur d'authentification du réseau. Dans cette variante, les données associées à un serveur applicatif et nécessaires pour la mise en œuvre de l'authentification sont mises à disposition de ce serveur.

Une clé secondaire générée à partir d'une clé principale peut être mise à disposition du serveur réseau qui authentifie et/ou déchiffre alors les messages provenant d'un terminal ou d'un dispositif de transmission avant de les transmettre, de préférence via une liaison sécurisée, au serveur applicatif concerné.

Inversement, les messages générés par un serveur applicatif sont signés et/ou chiffrés avec la clé secondaire par le serveur de réseau avant transmission à un terminal ou à un dispositif de transmission.

Une clé secondaire générée à partir d'une clé principale peut également être mise à disposition du serveur applicatif qui peut alors se charger de chiffrer les messages avant transmission et déchiffrer les messages reçus.

Dans le mode de réalisation décrit, une clé de session est générée lors de chaque authentification mutuelle. Une clé de session KSP est générée lors de l'authentification mutuelle du dispositif de transmission RP et du serveur de gestion SG, une clé de session KC1 est générée lors de l'authentification mutuelle du terminal C et du dispositif de transmission RP et une clé de session KC2 est générée lors de l'authentification mutuelle du terminal C et du serveur applicatif SA.

Au sens du standard LoRaWAN^{™}, ces clés de session sont des clés de session applicatives.

Dans les architectures de type LoRaWAN^{™}, la sécurité des échanges entre les terminaux et les serveurs d'application est assurée à deux niveaux distincts, i.e., au niveau réseau via divers contrôles d'intégrité réalisés par le serveur du réseau jouant les intermédiaires entre les terminaux et les serveurs d'application et par les terminaux eux-mêmes, et au niveau applicatif, via le chiffrement/déchiffrement des données applicatives échangées entre les terminaux et les serveurs d'application. Chacun de ces mécanismes s'appuie, lors de chaque session établie par un terminal avec un serveur d'application via le serveur du réseau, sur l'algorithme de chiffrement connu AES utilisé dans le protocole LoRaWAN^{™} paramétré tantôt au moyen de clés cryptographiques de session réseau, tantôt au moyen de clés cryptographiques de session applicatives. Ces clés cryptographiques sont ici de dimension 128 bits. On note toutefois que l'invention permet d'envisager aisément d'autres algorithmes de chiffrement symétriques que l'algorithme de chiffrement AES, ainsi que d'autres tailles de clés.

L'invention s'applique aussi à cette architecture.

Ainsi, dans une variante de réalisation, lors de l'authentification mutuelle requise par le dispositif de transmission RP, la demande d'authentification DA1 émise par le dispositif de transmission RP est interceptée par un serveur de réseau SR du réseau LoRa^{™}.

Suite à la réception de la demande d'authentification DA1, le serveur de réseau SR génère d'une part une clé réseau KRP et d'autre part la clé de session KSP.

De même, le dispositif de transmission RP génère également outre la clé de session KSP, la clé réseau KRP.

Les messages transmis par le dispositif de transmission RP à destination du serveur de gestion SG contiennent des données chiffrées par la clé de session KSP puis signées par la clé réseau KRP. Chaque message est reçu par le serveur de réseau SR qui en vérifie l'intégrité et l'authenticité grâce à sa clé réseau KRP, et les transmet au serveur de gestion SG qui le déchiffre avec la clé de session KSP. A titre d'alternative, s'il a été mandaté pour ce faire, le serveur réseau SR peut déchiffrer le message avec la clé de session KSP et transmettre le message déchiffré au serveur de gestion SG via la liaison LS, de préférence sécurisée.

De même, lors de l'étape d'authentification mutuelle entre le terminal C et le dispositif de transmission DP, une clé réseau KRC1 peut être générée à partir de la clé principale KPC d'une part par le terminal C et d'autre part par le dispositif de transmission RP.

De même, lors de l'étape d'authentification mutuelle entre le terminal C et le serveur réseau SR, une clé réseau KRC2 peut être générée à partir de la clé principale KPC d'une part par le terminal C et d'autre part par le serveur de réseau SR du réseau LoRa^{™}.

Les messages transmis ensuite par le terminal C sont alors également signés par la clé réseau KRC2 ou KRC1.

En variante de ce mode de réalisation, lors de la réception d'un message de données chiffré avec la clé de session KC2 et signé avec la clé réseau KRC2, en provenance du terminal C, le dispositif de transmission RP obtient à l'aide de la clé réseau KRC2, les données DATA chiffrées avec la clé de session KC2 c'est-à-dire KC2(DATA). Il chiffre alors ces données chiffrées (KC2(DATA)) avec la clé de session KSP puis les signe avec la clé réseau KRP avant de transmettre le message ainsi obtenu.

Le message est obtenu par le serveur réseau SR qui obtient et transmet les données chiffrées avec la clé de session KSP au serveur de gestion SG. Ce message est reçu par le serveur de gestion SG qui obtient, à l'aide de sa clé KSP, les données chiffrées avec la clé KC2 et transmet le message obtenu. Ce message est reçu enfin par le serveur applicatif SA qui obtient à l'aide de la clé KC2 les données DATA.

## Revendications

1. Procédé de gestion comportant les étapes suivantes mises en œuvre par un dispositif de transmission (RP) apte à communiquer via une première liaison radio à longue portée LoRa (L1) avec un équipement passerelle (EP1) formant nœud d'un réseau de télécommunication et configuré pour communiquer avec au moins un serveur dudit réseau via ledit équipement passerelle:
suite à la réception (S10) d'une première demande de connexion (DA2) émise via une deuxième liaison radio à longue portée LoRa (L2), par un terminal (C) figurant dans une liste (TG) d'au moins un terminal pour lequel ledit dispositif de transmission a obtenu des données de gestion (DG), établissement (S12) d'une session de communication sécurisée (SC2) entre le dispositif de transmission (RP) et ledit terminal (C),
sur réception (S22) d'un message de données (MD) émis par ledit terminal via la session de communication sécurisée (SC2), transfert (S22) dudit message via ladite première liaison radio (L1), si ledit terminal figure dans ladite liste ;
sur réception (S34) via ladite première liaison radio (L1) d'un message de données (MD3) destiné audit terminal, transfert (S34) dudit message audit terminal via la session de communication sécurisée (SC2), si ledit terminal figure dans ladite liste ;
réception (S56) via ladite première liaison radio, d'une demande (DG3) de fin de gestion dudit terminal ;
suite à la réception de ladite demande de fin de gestion, retrait (S68) dudit terminal de ladite liste.

2. Procédé de gestion selon la revendication 1 dans lequel suite à la réception de ladite demande de fin de gestion, le dispositif de transmission émet (S64) à destination dudit terminal une demande d'émission par ledit terminal d'une deuxième demande de connexion.

3. Procédé de gestion selon la revendication 1 dans lequel l'établissement de la session sécurisée comporte une génération d'une clé de session (KC1) partagée entre le dispositif de transmission et le terminal, à partir d'au moins une partie des données de gestion.

4. Procédé de gestion selon la revendication 1 dans lequel ladite demande (DG3) de fin de gestion est reçue via ledit équipement passerelle (EP1) et via ledit serveur réseau.

5. Procédé de gestion selon la revendication 1 dans lequel la demande de fin de gestion est transmise au dispositif de transmission via une session de communication sécurisée (SC1) établie entre le dispositif de transmission et un serveur dudit réseau.

6. Procédé de gestion selon la revendication 2 dans lequel ladite demande d'émission est émise en réponse à un message émis par ledit terminal via la session de communication établie entre le terminal et le dispositif de transmission.

7. Procédé de gestion selon la revendication 2 dans lequel le terminal est retiré de la liste après réception d'un accusé de réception émis par le terminal en réponse à la demande d'émission.

8. Procédé de gestion selon la revendication 2 dans lequel la réception de la demande de fin de gestion est suivie d'un envoi d'une demande de type New Channel définie dans le standard LoRaWAN^{™}.

9. Procédé de gestion selon la revendication 3 dans lequel lesdits messages de données émis par le terminal comprennent des données chiffrées ou signées avec la clé de session partagée par le terminal et le dispositif de transmission.

10. Procédé de gestion selon la revendication 3 dans lequel le procédé comporte une étape de transmission de données relatives à la clé de gestion générée à un serveur du réseau.

11. Dispositif de transmission (RP) comportant
un premier module (COM1) de communication configuré pour communiquer via une première liaison radio à longue portée de type LoRa (L1) avec un équipement passerelle (EP1) formant nœud d'un réseau de télécommunication et pour communiquer avec au moins un serveur du réseau via ledit équipement passerelle (EP1);
un deuxième module (COM2) de communication configuré pour communiquer via une deuxième liaison radio à longue portée de type LoRa (L2) avec au moins un terminal, ledit deuxième module de communication étant configuré pour recevoir via ladite deuxième liaison radio une première demande de connexion (DA2) émise par un terminal (C) figurant dans une liste (TG) d'au moins un terminal pour lequel ledit dispositif de transmission a obtenu des données de gestion (DG) ;
un module d'authentification (AUT) configuré pour établir, suite à la réception de la première demande de connexion, une session de communication sécurisée entre le dispositif de transmission (RP) et ledit terminal (C),
un module de transfert (TRF) configuré pour transférer via ladite première liaison radio, au moins un message de données émis via la session de communication sécurisée par ledit terminal, si ledit terminal figure dans ladite liste et pour transférer, sur réception via ladite première liaison radio, d'un message de données destiné audit terminal, ledit message audit terminal via la session sécurisée, si ledit terminal figure dans ladite liste ;
le premier module (COM1) de communication étant configuré pour recevoir via ladite première liaison radio, une demande de fin de gestion dudit terminal ; et
un module de gestion (GST) configuré pour, suite à la réception de ladite demande de fin de gestion, retirer ledit terminal de ladite liste.

## Patentansprüche

1. Verwaltungsverfahren, das die folgenden Schritte umfasst, die von einer Übertragungsvorrichtung (RP) durchgeführt werden, die geeignet ist, über eine erste Funkverbindung mit großer Reichweite LoRa (L1) mit einer Gateway-Einrichtung (EP1) zu kommunizieren, die einen Knoten eines Telekommunikationsnetzwerks bildet, und dazu ausgestaltet ist, mit mindestens einem Server des Netzwerks über die Gateway-Einrichtung zu kommunizieren:
nach dem Empfangen (S10) einer ersten Verbindungsanforderung (DA2), die über eine zweite Funkverbindung mit großer Reichweite LoRa (L2) gesendet wird, durch ein Endgerät (C), das in einer Liste (TG) mit mindestens einem Endgerät aufgeführt ist, für das die Übertragungsvorrichtung Verwaltungsdaten (DG) erhalten hat, Aufbauen (S12) einer gesicherten Kommunikationssitzung (SC2) zwischen der Übertragungsvorrichtung (RP) und dem Endgerät (C),
beim Empfangen (S22) einer Datennachricht (MD), die von dem Endgerät über die gesicherte Kommunikationssitzung (SC2) gesendet wird, Weiterleiten (S22) der Nachricht über die erste Funkverbindung (L1), wenn das Endgerät in der Liste aufgeführt ist;
beim Empfangen (S34), über die erste Funkverbindung (L1), einer Datennachricht (MD3), die für das Endgerät bestimmt ist, Weiterleiten (S34) der Nachricht an das Endgerät über die gesicherte Kommunikationssitzung (SC2), wenn das Endgerät in der Liste aufgeführt ist;
Empfangen (S56), über die erste Funkverbindung, einer Verwaltungsendeanforderung (DG3) für das Endgerät;
nach dem Empfangen der Verwaltungsendeanforderung Entfernen (S68) des Endgeräts aus der Liste.

2. Verwaltungsverfahren nach Anspruch 1, wobei nach dem Empfangen der Verwaltungsendeanforderung die Übertragungsvorrichtung an das Endgerät eine Anforderung zum Senden, durch das Endgerät, einer zweiten Verbindungsanforderung sendet (S64).

3. Verwaltungsverfahren nach Anspruch 1, wobei das Aufbauen einer gesicherten Sitzung ein Erzeugen eines Sitzungsschlüssels (KC1), der zwischen der Übertragungsvorrichtung und dem Endgerät geteilt wird, ausgehend von mindestens einem Teil der Verwaltungsdaten umfasst.

4. Verwaltungsverfahren nach Anspruch 1, wobei die Verwaltungsendeanforderung (DG3) über die Gateway-Einrichtung (EP1) und über den Netzwerkserver empfangen wird.

5. Verwaltungsverfahren nach Anspruch 1, wobei die Verwaltungsendeanforderung an die Übertragungsvorrichtung über eine gesicherte Kommunikationssitzung (SC1) übertragen wird, die zwischen der Übertragungsvorrichtung und einem Server des Netzwerks aufgebaut ist.

6. Verwaltungsverfahren nach Anspruch 2, wobei die Anforderung zum Senden als Antwort auf eine Nachricht gesendet wird, die von dem Endgerät über die zwischen dem Endgerät und der Übertragungsvorrichtung aufgebaute Kommunikationssitzung gesendet wird.

7. Verwaltungsverfahren nach Anspruch 2, wobei das Endgerät aus der Liste nach dem Empfangen einer Empfangsbestätigung entfernt wird, die von dem Endgerät als Antwort auf die Anforderung zum Senden gesendet wird.

8. Verwaltungsverfahren nach Anspruch 2, wobei auf das Empfangen der Verwaltungsendeanforderung ein Senden einer in dem Standard LoRaWAN^{™} definierten Anforderung von Typ New Channel folgt.

9. Verwaltungsverfahren nach Anspruch 3, wobei die von dem Endgerät gesendeten Datennachrichten Daten beinhalten, die mit dem von dem Endgerät und der Übertragungsvorrichtung geteilten Sitzungsschlüssel verschlüsselt oder signiert sind.

10. Verwaltungsverfahren nach Anspruch 3, wobei das Verfahren einen Schritt des Übertragens von Daten bezüglich des erzeugten Verwaltungsschlüssels an einen Server des Netzwerks umfasst.

11. Übertragungsvorrichtung (RP), umfassend:
ein erstes Kommunikationsmodul (COM1), das dazu ausgestaltet ist, über eine erste Funkverbindung mit großer Reichweite vom Typ LoRa (L1) mit einer Gateway-Einrichtung (EP1) zu kommunizieren, die einen Knoten eines Telekommunikationsnetzwerks bildet, und mit mindestens einem Server des Netzwerks über die Gateway-Einrichtung (EP1) zu kommunizieren;
ein zweites Kommunikationsmodul (COM2), das dazu ausgestaltet ist, über eine zweite Funkverbindung mit großer Reichweite vom Typ LoRa (L2) mit mindestens einem Endgerät zu kommunizieren, wobei das zweite Kommunikationsmodul dazu ausgestaltet ist, über die zweite Funkverbindung eine erste Verbindungsanforderung (DA2) zu empfangen, die von einem Endgerät (C) gesendet wird, das in einer Liste (TG) mit mindestens einem Endgerät aufgeführt ist, für das die Übertragungsvorrichtung Verwaltungsdaten (DG) erhalten hat;
ein Authentifizierungsmodul (AUT), das dazu ausgestaltet ist, nach dem Empfangen der ersten Verbindungsanforderung eine gesicherte Kommunikationssitzung zwischen der Übertragungsvorrichtung (RP) und dem Endgerät (C) aufzubauen,
ein Weiterleitungsmodul (TRF), das dazu ausgestaltet ist, über die erste Funkverbindung mindestens eine Datennachricht weiterzuleiten, die über die gesicherte Kommunikationssitzung von dem Endgerät gesendet wird, wenn das Endgerät in der Liste aufgeführt ist, und beim Empfangen über die erste Funkverbindung einer Datennachricht, die für das Endgerät bestimmt ist, die Nachricht über die gesicherte Sitzung an das Endgerät weiterzuleiten, wenn das Endgerät in der Liste aufgeführt ist;
wobei das erste Kommunikationsmodul (COM1) dazu ausgestaltet ist, über die erste Funkverbindung eine Verwaltungsendeanforderung für das Endgerät zu empfangen; und
ein Verwaltungsmodul (GST), das dazu ausgestaltet ist, nach dem Empfangen der Verwaltungsendeanforderung das Endgerät aus der Liste zu entfernen.

## Claims

1. Management method, comprising the following steps implemented by a transmission device (RP) able to communicate via a first LoRa long-range radio link (L1) with a gateway equipment (EP1) forming a node of a telecommunications network and configured so as to communicate with at least one server of said network via said gateway equipment:
following the reception (S10) of a first connection request (DA2) sent via a second LoRa long-range radio link (L2), by a terminal (C) contained in a list (TG) of at least one terminal for which said transmission device has obtained management data (DG), establishment (S12) of a secure communication session (SC2) between the transmission device (RP) and said terminal (C),
upon reception (S22) of a data message (MD) sent by said terminal via the secure communication session (SC2), transferal (S22) of said message via said first radio link (L1), if said terminal is contained in said list;
upon reception (S34), via said first radio link (L1), of a data message (MD3) intended for said terminal, transferal (S34) of said message to said terminal via the secure communication session (SC2), if said terminal is contained in said list;
reception (S56), via said first radio link, of a request (DG3) to end management of said terminal;
following the reception of said end of management request, removal (S68) of said terminal from said list.

2. Management method according to Claim 1, wherein, following the reception of said end of management request, the transmission device sends (S64), to said terminal, a request for said terminal to send a second connection request.

3. Management method according to Claim 1, wherein establishing the secure session comprises generating a session key (KC1) shared between the transmission device and the terminal, from at least some of the management data.

4. Management method according to Claim 1, wherein said end of management request (DG3) is received via said gateway equipment (EP1) and via said network server.

5. Management method according to Claim 1, wherein the end of management request is transmitted to the transmission device via a secure communication session (SC1) established between the transmission device and a server of said network.

6. Management method according to Claim 2, wherein said send request is sent in response to a message sent by said terminal via the communication session established between the terminal and the transmission device.

7. Management method according to Claim 2, wherein the terminal is removed from the list after reception of an acknowledgement of receipt sent by the terminal in response to the send request.

8. Management method according to Claim 2, wherein the reception of the end of management request is followed by sending of a New Channel request defined in the LoRaWAN^{™} standard.

9. Management method according to Claim 3, wherein said data messages sent by the terminal comprise data encrypted or signed with the session key shared by the terminal and the transmission device.

10. Management method according to Claim 3, wherein the method comprises a step of transmitting data relating to the generated management key to a server of the network.

11. Transmission device (RP) comprising:
a first communication module (COM1) configured so as to communicate with a gateway equipment (EP1) forming a node of a telecommunications network via a first LoRa long-range radio link (L1) and to communicate with at least one server of the network via said gateway equipment (EP1);
a second communication module (COM2) configured so as to communicate with at least one terminal via a second LoRa long-range radio link (L2), said second communication module being configured so as to receive, via said second radio link, a first connection request (DA2) sent by a terminal (C) contained in a list (TG) of at least one terminal for which said transmission device has obtained management data (DG);
an authentication module (AUT) configured so as to establish, following the reception of the first connection request, a secure communication session between the transmission device (RP) and said terminal (C),
a transfer module (TRF) configured so as to transfer, via said first radio link, at least one data message sent via the secure communication session by said terminal, if said terminal is contained in said list, and to transfer, upon reception of a data message intended for said terminal via said first radio link, said message to said terminal via the secure session, if said terminal is contained in said list;
the first communication module (COM1) being configured so as to receive, via said first radio link, a request to end management of said terminal; and
a management module (GST) configured so as to remove said terminal from said list following the reception of said end of management request.
